# EUROPÄISCHE PATENTSCHRIFT

(11) **EP 3 297 792 B1**
(45) Veröffentlichungstag und Bekanntmachung des Hinweises auf die Patenterteilung: **27.03.2019**
(21) Anmeldenummer: 16721431.1
(22) Anmeldetag: 10.05.2016
(51) Int. Cl.: B25J 9/16

(54) **STEUERN UND REGELN VON AKTOREN EINES ROBOTERS UNTER BERÜCKSICHTIGUNG VON UMGEBUNGSKONTAKTEN**
CONTROL AND REGULATION OF ACTUATORS OF A ROBOT BY TAKING INTO CONSIDERATION AMBIENT CONTACTS
COMMANDE ET RÉGULATION D'ACTIONNEURS D'UN ROBOT AVEC PRISE EN COMPTE DES CONTACTS ENVIRONNANTS

(30) Priorität: 20.05.2015 DE 102015108010
(43) Veröffentlichungstag der Anmeldung: 28.03.2018
(73) Patentinhaber: Cavos Bagatelle Verwaltungs GmbH & Co. KG, 80538 München (DE)
(72) Erfinder: HADDADIN, Sami, 30173 Hannover (DE)
(74) Vertreter: Rösler Rasch van der Heide & Partner
(86) Internationale Anmeldenummer: PCT/EP2016/060419
(87) Internationale Veröffentlichungsnummer: WO 2016/184726

(56) Entgegenhaltungen:
- US-A1- 2013 073 085

## Beschreibung

Die Erfindung betrifft ein Verfahren und eine Vorrichtung zum Steuern und Regeln von Aktoren eines Roboters unter Berücksichtigung von mechanischen Kontakten mit einer Umgebung des Roboters, wobei der Roboter zumindest zwei Teile umfasst, die über eine durch einen Aktor antreibbare Gelenkverbindung verbunden sind, so dass sich die Teile relativ zueinander bewegen können.

Die Erfassung und Interpretation von mechanischen Umgebungskontakten ist von Bedeutung für die Steuerung und Regelung von aktorisch beweglichen Teilen des Roboters (bspw. den Gliedern eines Roboterarms), insbesondere bei Roboter-Mensch Interaktionen und -Kollaboration. Hierbei geht es darum, zwischen gewollten Kontaktereignissen und ungewollten Kotaktereignissen, d.h. Kollisionen zu unterscheiden. Gewollte Kontaktereignisse ergeben sich typischerweise aus der Aufgabe des Roboters, bspw. einer Handhabung eines Objektes und/oder Roboter-Mensch Interaktionen in einem vorgegebenen Interaktionsbereich. Ungewollte Kontaktereignisse sind alle Kontaktereignisse, die nicht gewollte Kontaktereignisse sind. Also insbesondere Kollisionen mit Gegenständen oder Menschen in der Umgebung des Roboters, die nicht innerhalb des vorgegebenen Interaktionsbereichs liegen oder auch mit der Umgebung selbst. US2013/073085 zeigt ein Verfahren zum Steuern von Aktoren eines Roboters.

Die Aufgabe der Erfindung ist es, ein verbessertes Verfahren und eine verbesserte Vorrichtung zum Steuern und Regeln von Aktoren eines Roboters unter Berücksichtigung von Umgebungskontakten anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Der verfahrensgemäße Aspekt der Aufgabe wird gelöst durch ein Verfahren zum Steuern und Regeln von Aktoren eines Roboters unter Berücksichtigung von Umgebungskontakten, wobei der Roboter zumindest zwei Teile umfasst, die über eine durch einen Aktor antreibbare Gelenkverbindung verbunden sind. Die Teile können Glieder eines Roboterarms, oder Kopf, Rumpf oder Extremitäten eines Humanoiden sein. Insbesondere kann der Roboter mehrere Teile umfassen, die über mehrere durch Aktoren antreibbare Gelenkverbindungen verbunden sind.

Das Verfahren umfasst folgende Schritte. In einem ersten Schritt erfolgt mittels eines Sensorsystems ein Ermitteln und Speichern einer ein- oder mehrdimensionalen zeitabhängigen Größe G(t), mit der das zeitliche Einwirken einer oder mehrerer externer Kontakt-Kräfte Fₑₓₜ und/oder eines oder mehrerer externer Momente Mₑₓₜ auf die Teile beschreibbar ist. Die Größe G(t) kann insbesondere mehrdimensional sein, d.h. mehrere Komponenten g(t) aufweisen: G(t) = [g₁(t), g₂(t), g₃(t), g₄(t), ...]. Die Größe G(t) kann bspw. eine oder mehrere Kräfte und/oder eine oder mehrere Drehmomente und/oder eine oder mehrere mechanische Spannungen und/oder eine oder mehrere Drücke angeben oder eine oder mehrere daraus ermittelte ein- oder mehrdimensionale Größen angeben. Komponenten der Größe G(t) können sich auf eine j-te Gelenkverbindung oder ein j-tes der Teile beziehen: Gⱼ(t), d.h. Komponenten der Größe G(t) werden jeweils für mehrere der Teile und/oder für mehrere der Gelenkverbindungen ermittelt.

Das Sensorsystem umfasst vorteilhaft Messsensoren zur Erfassung von Kräften, Momenten, Spannungen und/oder Drücken, weiterhin eine Auswerteelektronik und eine Speichereinheit zumindest zur temporären Speicherung von Messergebnissen. Das Sensorsystem umfasst vorteilhaft Näherungssensoren, d.h. Sensoren, die eine Annäherung eines Objekts erfassen, ohne dass bereits ein mechanischer Kontakt besteht. Das Sensorsystem umfasst vorteilhaft mindestens einen, an einem der Teile angeordneten Sensor mit flächig angeordneten Sensorelementen zur positionssensitiven Erfassung von externen Kräften Fₑₓₜ und/oder Momenten Mₑₓₜ relativ zu dem Teil, wobei die Größe G(t) auf Basis der erfassten externen Kräfte Fₑₓₜ und/oder Momente Mₑₓₜ ermittelt wird. Ein Beispiel dieser Weiterbildung ist der Einsatz einer "künstlichen Haut" mit haptischer Sensorik zur Erfassung von auf die Teile einwirkenden Kräften, Momenten, Spannungen, Drücken, Einwirkorte etc. Das Sensorsystem kann insbesondere einen mit einer der Gelenkverbindungen verbundenen Drehmoment- und/oder Kraft- und/oder Beschleunigungssensor zur Erfassung eines an der Gelenkverbindung angreifenden Drehmoments und/oder einer an der Gelenkverbindung angreifenden Kraft und/oder einer an der Gelenkverbindung angreifenden Beschleunigung umfassen.

Vorteilhaft umfasst das Sensorsystem eine Einheit zur auf aktuellen Messdaten der Messsensoren basierenden Schätzung bzw. Prädiktion von Kräften, Momenten, Spannungen und/oder Drücken. Vorteilhaft werden bei der Schätzung/Prädiktion historische Messdaten von Kollisionen mit Objekten verwendet.

In einem zweiten Schritt erfolgt ein Bereitstellen einer Bedingung B für diese Größe G(t). Die Bedingung B kann zeitvariant und/oder abhängig vom Zustand des Roboters sein. Eine einfache Bedingung B lautet beispielsweise: der Betrag von G(t): |G(t)| ist kleiner als oder gleich einem Grenzwert F: |G(t)| ≤ F. Eine mögliche I-dimensionale Formulierung lautet bspw.: |gᵢ(t)| ≤ fᵢ mit G(t) = [gᵢ(t)] ; F = [fᵢ], und i = 1, 2, ..., I. Die Bedingung B wird vorteilhaft derart gewählt, dass eine Unterscheidung zwischen einem Einwirken und einem Nichteinwirken einer externen Kraft Fₑₓₜ und/oder Momente Mₑₓₜ auf die beweglichen Teile des Roboters unterschieden werden kann, wobei vorliegend davon ausgegangen wird, dass solange die Bedingung B erfüllt ist, keine Einwirkung einer externen Kraft Fₑₓₜ und/oder Moment Mₑₓₜ vorliegt.

Die Bedingung wird vorteilhaft derart gewählt, dass sie eine Unterscheidung zwischen einem Betrieb des Roboters ohne Einwirkung einer externen Kraft bzw. eines externen Moments und eine Betrieb des Roboters mit Einwirkung einer externen Kraft bzw. eines externen Moments erlaubt.

Die Bedingung B kann vorteilhaft bspw. dadurch ermittelt werden, dass der Roboter mit seinen aktorisch beweglichen Teilen Zufallsbewegungen ohne den Einfluss externer Kräfte Fₑₓₜ (ausgenommen seien die Gravitationskraft und ggf. die Corioliskraft) ausführt, und mit dem Sensorsystem diese Bewegungen beschreibende Parameter (bspw. Kräfte, Momente, Impulse etc.) erfasst und ausgewertet werden. Dieser Parameterbereich definiert somit Bewegungen des Roboters ohne Einwirkung einer externen Kraft Fₑₓₜ.

In einem dritten Schritt wird, sofern die Bedingung B durch G(t) zu einer Zeit t₀ nicht erfüllt wird, für die erfasste Größe G(t) über ein Zeitintervall T = [tₐ, tₑ], mit tₐ = Beginn des Zeitintervalls, tₑ = Ende des Zeitintervalls, t₀ ∈ T und t₀ < tₑ, ein Merkmalsvektor *M̅* ermittelt, der alle der folgende Komponenten umfasst:
- einen Median oder Mittelwert von G(t) im Zeitintervall T,
- ein Minimum und ein Maximum von G(t) im Zeitintervall T,
- eine Abweichung von G(t) vom Median oder vom Mittelwert im Zeitintervall T,
- eine Signalbreite von G(t) im Zeitintervall T,
- ein Frequenzspektrum von G(t) im Zeitintervall T, und
- eine oder mehrere charakteristische Frequenzen des Frequenzspektrums.

Der vorstehenden Logik folgend gibt t₀ den Zeitpunkt an, zu dem die vorgegebene Bedingung B von G(t) nicht mehr erfüllt wird, d.h. ab der zumindest eine externe Kraft Fₑₓₜ oder ein Moment auf zumindest eines der Teile oder eine Gelenkverbindung einwirkt. Vorteilhaft sind der Beginn tₐ des Zeitintervalls T und das Ende tₑ des Zeitintervalls T zeitabhängig: tₐ = tₐ(t) und tₑ = tₑ(t) oder nur das Ende tₑ des Zeitintervalls T ist zeitabhängig: tₑ = tₑ(t). Im ersten Fall kann sich bspw. das Intervall T mit der Zeit t in Zeitrichtung verschieben. Im zweiten Fall wird das Zeitintervall T einseitig größer, d.h. der Zeitpunkt tₐ ist fix und nur tₑ(t) verschiebt sich mit der Zeit t. Das Zeitintervall T weist vorteilhaft eine Länge von 10 ms, 20 ms, 50 ms, 75 ms, 100 ms, 250 ms, 500 ms, 750 ms, 1 s, 1.5 s, 2.0 s, 2.5 s, 3.0 s, 4.0 s, 5.0 s, 6.0 s, 7.0 s oder 10 s auf.

In einem vierten Schritt erfolgt ein Klassifizieren des ermittelten Merkmalsvektors
*M̅* anhand vorgegebener Kategorien, die jeweils eine Kontaktart zumindest eines der Teile oder eines der Verbindungsgelenke mit einem Objekt angeben, die sich jeweils durch entsprechende externe Kontakt-Kräfte Fₑₓₜ und/oder externe Kontaktmomente Mₑₓₜ vermitteln, zur Erzeugung eines Klassifizierungsergebnisses KE. Die Kategorien erlauben vorteilhaft neben einer Unterscheidung "gewolltes Kontaktereignis" oder "ungewolltes Kontaktereignis" auch noch Aussagen über die Art des Objekts, das den Kontakt auslöst, bspw. ob die Kontaktstelle des Kontaktobjekts aus einem harten oder weniger harten Material besteht. Die Kategorien können durch entsprechende Versuchsreihen und/oder Simulationsrechnungen oder aus bereitgestellten Datenbanken, bspw. aus einer Daten "Cloud", leicht ermittelt werden.

Das Klassifizieren des Merkmalsvektors *M̅* erfolgt vorteilhaft mittels einer Support Vector Maschine SVM und/oder mittels eines Hidden Markov-Modells und/oder mittels eines neuronalen Netzes und/oder mittels eines Gauß-Prozesses oder einer Kombination daraus.

In einem fünften Schritt erfolgt das Steuern und/ oder Regeln des zumindest einen Aktors für Zeiten t > t₀ abhängig von dem Klassifizierungsergebnis KE. Je nach ermitteltem Klassifizierungsergebnis KE erfolgt eine Steuerung und/oder Regelung des Aktors vorteilhaft derart, dass eine Bewegung der Teile gestoppt wird, verlangsamt wird, beschleunigt wird oder eine Bewegung in entgegen gesetzter Richtung eingeleitet wird. Eine beschleunigte Bewegung sowie eine Bewegung in entgegengesetzter Richtung entsprechen einer Ausweichbewegung zur Minderung potentieller Schäden am Roboter bzw. am Kollisionsobjekt.

Die Erfinder haben erkannt, dass das vorgeschlagene Verfahren, und insbesondere die vorgeschlagene Zusammenstellung der Komponenten des Merkmalsvektors *M̅* eine sehr genaue und robuste Analyse und Klassifikation der Art der Einwirkung einer externen Kraft Fₑₓₜ als gewolltes Kontaktereignis oder ungewolltes Kontaktereignis erlauben, so dass das Verfahren die Steuerung bzw. Regelung von Aktoren des Roboters mit einer erheblich verbesserten Berücksichtigung und in Reaktion auf Umgebungskontakte ermöglicht.

Die Analyse und Klassifikation von Umgebungskontakten des Roboters kann vorteilhaft verbessert werden, wenn der Merkmalsvektor *M̅* zusätzlich folgende Komponenten umfasst:
- ein Maß des Informationsgehalts wie z.B. die Shannon-Entropie oder Shannon-Entropie-Verteilung von G(t) im Zeitintervall T und/oder
- einen oder mehrere Hjorth-Parameter wie die Aktivität, Mobilität oder Komplexität von G(t) im Zeitintervall T und/oder
- einen oder mehrere Energie-verwandte Parameter von G(t) im Zeitintervall T und/oder
- einen oder mehrere Autokorrelations-verwandte Parameter von G(t) im Zeitintervall T und/oder
- einen oder mehrere Schiefe-Parameter von G(t) im Zeitintervall T und/oder
- einen oder mehrere spektrale Phasen-Parameter von G(t) im Zeitintervall T und/oder
- einen oder mehrere spektrale Amplituden-Parameter von G(t) im Zeitintervall T

Weiterhin vorteilhaft kann der Merkmalsvektor *M̅* Parameter von zwei oder mehr zueinander zeitversetzen Klassifikatoren umfassen, wobei die Klassifikatoren deren Parameter auch für unterschiedliche Zeitintervalle T ermitteln können.

Die Aufgabe der Erfindung ist weiterhin gelöst durch ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Zudem wird die Aufgabe der Erfindung gelöst durch ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ferner wird die Aufgabe der Erfindung gelöst durch ein Computer-Programm-Produkt mit auf einem maschinenlesbaren Träger gespeichertem Programmcode zur Durchführung des Verfahrens, wie vorstehend beschrieben, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Der vorrichtungsgemäße Aspekt der Erfindung wird gelöst durch eine Vorrichtung zum Steuern und Regeln von Aktoren eines Roboters unter Berücksichtigung von Umgebungskontakten, wobei der Roboter zumindest zwei Teile umfasst, die über eine durch einen Aktor antreibbare Gelenkverbindung verbunden sind, aufweisend: ein Sensorsystem zum Ermitteln und Speichern einer zeitabhängigen Größe G(t), mit der das zeitliche Einwirken einer oder mehrerer externer Kontakt-Kräfte Fₑₓₜ und/oder eines oder mehrerer externer Momente Mₑₓₜ auf die Teile beschreibbar ist, eine Schnittstelle zum Bereitstellen einer Bedingung B für diese Größe G(t), eine Auswerteeinheit, die derart ausgeführt und eingerichtet ist, dass sofern die Bedingung B durch G(t) zu einer Zeit t₀ nicht erfüllt wird, für die erfasste Größe G(t) über ein Zeitintervall T = [tₐ, t_{e]}, mit tₐ = Beginn des Zeitintervalls, tₑ = Ende des Zeitintervalls, t₀ ∈ T und t₀ < tₑ, ein Merkmalsvektor *M̅* ermittelt wird, der folgende Komponenten umfasst: einen Median oder Mittelwert von G(t) im Zeitintervall T, ein Minimum und ein Maximum von G(t) im Zeitintervall T, eine Abweichung von G(t) vom Median oder vom Mittelwert im Zeitintervall T, eine Signalbreite von G(t) im Zeitintervall T, ein Frequenzspektrum von G(t) im Zeitintervall T, und eine oder mehrere charakteristische Frequenzen des Frequenzspektrums, eine Klassifikationseinheit zum Klassifizieren des Merkmalsvektors *M̅* anhand vorgegebener Kategorien von möglichen Merkmalsvektoren *M̅*ₘ, die jeweils eine Kontaktart der Teile mit einem Objekt einer Umgebung angeben, die sich jeweils durch entsprechende externe Kontakt-Kräfte Fₑₓₜ und/oder externe Kontaktmomente Mₑₓₜ vermitteln, zur Erzeugung eines Klassifizierungsergebnisses KE, und eine Einheit zum Steuern und/oder Regeln des Aktors abhängig von dem Klassifizierungsergebnis KE. Sensoren des Sensorsystems können vorteilhaft eine Kombination aus Näherungssensoren und Kraftsensoren sein, wobei Kraftsensoren nicht zwingend zwischen Ziehen und Drücken unterscheiden können (ob eine Kraft zieht oder drückt resultiert aus der Information auf welcher Seite des Körpers sie wirkt), in diesem Fall könnten bspw. die Näherungssensoren diese Uneindeutigkeit auflösen.

Weiterentwicklungen und Vorteile der vorgeschlagenen Vorrichtung ergeben sich durch eine sinngemäße und analoge Übertragung der zu dem vorgeschlagenen Verfahren gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Ablaufschema eines erfindungsgemäßen Verfahrens, und
- Fig. 2: einen schematischen Aufbau einer erfindungsgemäßen Vorrichtung

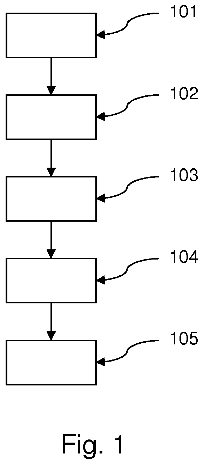

**Fig. 1** zeigt ein Ablaufschema eines erfindungsgemäßen Verfahrens zum Steuern und Regeln von drei Aktoren eines Roboterarms unter Berücksichtigung von Umgebungskontakten, wobei in dem vorliegenden Ausführungsbeispiel der Roboterarm vier Armsegmente umfasst, die seriell über drei jeweils durch einen der Aktoren antreibbare Gelenkverbindungen verbunden sind. Jede der drei Gelenkverbindungen weist in diesem Ausführungsbeispiel zudem einen Momentensensor zur Erfassung von Momentenmesswerten mᵢ(t) auf, mit i = 1, 2, 3. Im Zeitverlauf wird also von jedem Momentensensor eine Zeitreihe von Messwerten mᵢ(t) erfasst.

Ein Sensorsystem umfasst neben den Momentensensoren eine Auswerteeinheit und eine Speichereinheit. Das Sensorsystem ermittelt in einem ersten Schritt 101 auf Basis der Momentenmesswerte mᵢ(t) vorliegend ein zeitabhängiges Gesamtmoment G(t) das auf den Roboterarm wirkt.

Die Momentenmesswerte mᵢ(t) ergeben in der Regel noch nicht direkt das externe Gesamtmoment G(t), da noch Inertialkräfte, Corioliskräfte und Gravitiationskräfte berücksichtigt werden müssen. Darum muss das externe Gesamtmoment G(t) in der Regel geschätzt oder zumindest (für den Fall, dass Beschleunigungssensoren existieren) algebraisch ermittelt werden.

Die Größe G(t) ist demzufolge in dem Ausführungsbeispiel eine skalare Größe, mit der das zeitliche Einwirken einer oder mehrerer externer Kontakt-Kräfte Fₑₓₜ und/oder eines oder mehrerer externer Momente Mₑₓₜ auf den Roboterarm beschreibbar ist. Natürlich kann die Größe G(t) auch mehrdimensional sein. In einem einfachen mehrdimensionalen Fall ist bspw. G(t) = Gᵢ(t) = [g₁(t), g₂(t), g₃(t)]^{T} = mᵢ(t) = [m₁(t), m₂(t), m₃(t)]^{T}.

In einem zweiten Schritt 102 erfolgt ein Bereitstellen einer Bedingung B für die Größe G(t), im vorliegenden Fall die Bedingungen G(t) ≤ F. Die Bedingung B bzw. der Grenzwert Fᵢ ist derart gewählt, dass solange kein Umgebungskontakt mit dem Roboterarm erfolgt, also weder ein gewolltes noch ein ungewolltes Kontaktereignis vorliegt, die Bedingung B erfüllt ist. Der entsprechende Grenzwert F kann hierzu in Versuchsreihen ermittelt werden, in denen der Roboterarm Zufallsbewegungen ausführt, ohne dass es dabei zu einem Umgebungskontakt kommt. Hierbei handelt es sich in der Regelung der Aktoren um Kalibrierschritte, die die Messung oder Schätzung der externen Drehmomente und/oder -kräfte zu verbessern versuchen.

Sofern die Bedingung B durch G(t) zu einer Zeit t₀ nicht erfüllt wird, d.h. dass ein Umgebungskontakt zustande kam, wird in einem dritten Schritt 103 für die erfasste Größe G(t) über ein Zeitintervall T = [tₐ, tₑ], mit tₐ = Beginn des Zeitintervalls, tₑ = Ende des Zeitintervalls, t₀ ∈ T und t₀ < tₑ, ein Merkmalsvektor *M̅* (G(t)) ermittelt, der alle folgende Komponenten umfasst:
- einen Median von Gᵢ(t) im Zeitintervall T,
- ein Minimum und ein Maximum von G(t) im Zeitintervall T,
- eine Abweichung von G(t) vom Median im Zeitintervall T,
- eine Signalbreite von G(t) im Zeitintervall T,
- ein Frequenzspektrum von G(t) im Zeitintervall T, und
- Eigenfrequenzen des Frequenzspektrums.

In einem vierten Schritt 104 erfolgt ein Klassifizieren des Merkmalsvektors *M̅* (G(t)) anhand vorgegebener Kategorien von möglichen Merkmalsvektoren *M̅ₘ* zur Erzeugung eines Klassifizierungsergebnisses KE. Das Klassifizierungsergebnis KE gibt also eine konkrete Kontaktkategorie an. Die vorgegebenen Kategorien möglicher Merkmalsvektoren *M̅*ₘ werden bspw. auf Basis entsprechender Versuchsreihen ermittelt, in denen verschiedenste Szenarien von Umgebungskontakten ausgewertet und in Kategorien eingeteilt werden. Diese Kategorien geben vorteilhaft unterschiedliche Kontaktarten eines der Armsegmente und/oder der Gelenkverbindungen mit einem Objekt einer Umgebung an, die durch externe Kräfte Fₑₓₜ und/oder durch Kontaktmomente Mₑₓₜ vermittelt werden.

In einem fünften Schritt 105 erfolgt ein Steuern und/oder Regeln der Aktoren für Zeiten t > t₀ abhängig von dem Klassifizierungsergebnis KE. Dabei wird bspw. in einer Look-Up Tabelle zu jedem Klassifizierungsergebnis KE eine Vorgabe zur Steuerung und/oder Regelung gemacht. Es kann aber auch ein Zusammenhang über mathematische Formeln, bspw. über Differentialgleichungen erfolgen.

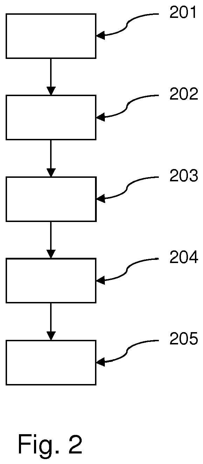

**Fig. 2** zeigt eine Vorrichtung zum Steuern und Regeln von Aktoren eines Roboters unter Berücksichtigung von Umgebungskontakten, wobei der Roboter zumindest zwei Teile umfasst, die über eine durch einen Aktor antreibbare Gelenkverbindung verbunden sind. Die Vorrichtung umfasst ein Sensorsystem 201 zum Ermitteln und Speichern einer zeitabhängigen Größe G(t), mit der das zeitliche Einwirken einer oder mehrerer externer Kontakt-Kräfte Fₑₓₜ und/oder eines oder mehrerer externer Momente Mₑₓₜ auf die Teile beschreibbar ist, eine Schnittstelle 202 zum Bereitstellen einer Bedingung B für diese Größe G(t), eine Auswerteeinheit 203, die derart ausgeführt und eingerichtet ist, dass sofern die Bedingung B durch G(t) zu einer Zeit t₀ nicht erfüllt wird, für die erfasste Größe G(t) über ein Zeitintervall T = [tₐ, t_{e]}, mit tₐ = Beginn des Zeitintervalls, tₑ = Ende des Zeitintervalls, t₀ ∈ T und t₀ < tₑ, ein Merkmalsvektor *M̅*(G(t)) ermittelt wird, der folgende Komponenten umfasst: einen Median oder Mittelwert von G(t) im Zeitintervall T, ein Minimum und ein Maximum von G(t) im Zeitintervall T, eine Abweichung von G(t) vom Median oder vom Mittelwert im Zeitintervall T, eine Signalbreite von G(t) im Zeitintervall T, ein Frequenzspektrum von G(t) im Zeitintervall T, und eine oder mehrere charakteristische Frequenzen des Frequenzspektrums, eine Klassifikationseinheit 204 zum Klassifizieren des Merkmalsvektors *M̅* (G(t)) anhand vorgegebener Kategorien die jeweils eine Kontaktart der Teile mit einem Objekt einer Umgebung angeben, die sich jeweils durch entsprechende externe Kontakt-Kräfte Fₑₓₜ und/oder externe Kontaktmomente Mₑₓₜ vermitteln, zur Erzeugung eines Klassifizierungsergebnisses KE, und eine Einheit (205) zum Steuern und/oder Regeln des Aktors abhängig von dem Klassifizierungsergebnis KE.

### Bezugszeichenliste

- 101 - 105: Verfahrensschritte

- 201: Sensorsystem
- 202: Schnittstelle
- 203: Auswerteeinheit
- 204: Klassifikationseinheit
- 205: Einheit zum Steuern und/oder Regeln der Aktoren

## Patentansprüche

1. Verfahren zum Steuern und Regeln von Aktoren eines Roboters unter Berücksichtigung von Umgebungskontakten, wobei der Roboter zumindest zwei Teile umfasst, die über eine durch einen Aktor antreibbare Gelenkverbindung verbunden sind, mit folgenden Schritten:
- mittels eines Sensorsystems Ermitteln und Speichern einer zeitabhängigen ein-oder mehrdimensionalen Größe G(t), mit der das zeitliche Einwirken einer oder mehrerer externer Kontakt-Kräfte Fₑₓₜ und/oder eines oder mehrerer externer Momente Mₑₓₜ auf die Teile beschreibbar ist,
- Bereitstellen einer Bedingung B für die Größe G(t),
- sofern die Bedingung B durch G(t) zu einer Zeit t₀ nicht erfüllt wird, wird für die erfasste Größe G(t) über ein Zeitintervall T = [tₐ, t_{e]}, mit tₐ = Beginn des Zeitintervalls, tₑ = Ende des Zeitintervalls, t₀ ∈ T und t₀ < tₑ, ein Merkmalsvektor *M̅* (G(t)) ermittelt, der folgende Komponenten umfasst:
- einen Median oder Mittelwert von G(t) im Zeitintervall T,
- ein Minimum und ein Maximum von G(t) im Zeitintervall T,
- eine Abweichung von G(t) vom Median oder vom Mittelwert im Zeitintervall T,
- eine Signalbreite von G(t) im Zeitintervall T,
- ein Frequenzspektrum von G(t) im Zeitintervall T, und
- eine oder mehrere charakteristische Frequenzen des Frequenzspektrums,
- Klassifizieren des Merkmalsvektors *M̅* (G(t)) anhand vorgegebener Kategorien, die jeweils eine Kontaktart eines der Teile oder der Gelenkverbindung mit einem Objekt einer Umgebung angeben, die sich jeweils durch entsprechende externe Kontakt-Kräfte Fₑₓₜ und/oder externe Kontaktmomente Mₑₓₜ vermitteln, zur Erzeugung eines Klassifizierungsergebnisses KE, und
- Steuern und/oder Regeln des Aktors für Zeiten t > t₀ abhängig von dem Klassifizierungsergebnis KE.

2. Verfahren nach Anspruch 1,
bei dem der Merkmalsvektor *M̅* (G(t)) zusätzlich folgende Komponenten umfasst:
- eine Shannon-Entropie oder Shannon-Entropie-Verteilung von G(t) im Zeitintervall T und/oder
- einen Hjorth-Parameter von G(t) im Zeitintervall T und /oder
- einen oder mehrere Energie-Parameter von G(t) im Zeitintervall T und/oder
- einen oder mehrere Autokorrelationsparameter von G(t) im Zeitintervall T und/oder
- einen Schiefe-Parameter von G(t) im Zeitintervall T und/oder
- einen oder mehrere spektrale Phasen-Parameter von G(t) im Zeitintervall T und/oder
- einen oder mehrere spektrale Amplituden-Parameter von G(t) im Zeitintervall T.

3. Verfahren nach Anspruch 1 oder 2,
bei dem der Beginn tₐ des Zeitintervalls T und das Ende tₑ des Zeitintervalls T zeitabhängig sind tₐ = tₐ(t) und tₑ = tₑ(t) oder das Ende tₑ des Zeitintervalls T zeitabhängig ist tₑ = tₑ(t).

4. Verfahren nach einem der Ansprüche 1 bis 3,
bei dem der Roboter mehrere Teile umfasst, die über mehrere durch Aktoren antreibbare Gelenkverbindungen verbunden sind.

5. Verfahren nach einem der Ansprüche 1 bis 4,
bei dem die Größe G(t) eine oder mehrere Kräfte und/oder ein oder mehrere Drehmomente und/oder eine oder mehrere mechanische Spannungen und/oder einen oder mehrere Drücke angibt.

6. Verfahren nach einem der Ansprüche 1 bis 5,
bei dem das Sensorsystem mindestens einen, an einem der Teile angeordneten Sensor mit flächig angeordneten Sensorelementen zur positionssensitiven Erfassung von externen Kräften Fₑₓₜ relativ zu dem Teil umfasst, wobei die Größe G(t) auf Basis der erfassten externen Kräfte Fₑₓₜ ermittelt wird.

7. Verfahren nach einem der Ansprüche 1 bis 6,
bei dem das Sensorsystem einen mit einer der Gelenkverbindungen verbundenen Drehmoment- und/oder Kraft- und/oder Beschleunigungssensor zur Erfassung eines an der Gelenkverbindung angreifenden Drehmoments und/oder einer an der Gelenkverbindung angreifenden Kraft und/oder einer an der Gelenkverbindung angreifenden Beschleunigung umfasst.

8. Verfahren nach einem der Ansprüche 1 bis 7,
bei dem die Größe G(t) jeweils für einen oder mehrere der Teile und/oder für eine oder mehrere Gelenkverbindungen ermittelt wird.

9. Verfahren nach einem der Ansprüche 1 bis 8,
bei dem abhängig von dem Klassifizierungsergebnis KE eine Steuerung und/oder Regelung des Aktors derart erfolgt, dass eine Bewegung der Teile gestoppt wird, verlangsamt wird, beschleunigt wird oder eine Bewegung in entgegengesetzter Richtung eingeleitet wird.

10. Vorrichtung zum Steuern und Regeln von Aktoren eines Roboters unter Berücksichtigung von Umgebungskontakten, wobei der Roboter zumindest zwei Teile umfasst, die über eine durch einen Aktor antreibbare Gelenkverbindung verbunden sind, und zur Ausführung eines Verfahrens nach einem der vorstehenden Ansprüche aufweisend:
- ein Sensorsystem zum Ermitteln und Speichern einer zeitabhängigen Größe G(t), mit der das zeitliche Einwirken einer oder mehrerer externer Kontakt-Kräfte Fₑₓₜ und/oder eines oder mehrerer externer Momente Mₑₓₜ auf die Teile beschreibbar ist,
- eine Schnittstelle zum Bereitstellen einer Bedingung B für diese Größe G(t),
- eine Auswerteeinheit, die derart ausgeführt und eingerichtet ist, dass sofern die Bedingung B durch G(t) zu einer Zeit t₀ nicht erfüllt wird, für die erfasste Größe G(t) über ein Zeitintervall T = [tₐ, t_{e]}, mit tₐ = Beginn des Zeitintervalls, tₑ = Ende des Zeitintervalls, t₀ ∈ T und t₀ < tₑ, ein Merkmalsvektor *M̅* (G(t)) ermittelt wird, der folgende Komponenten umfasst:
- einen Median oder Mittelwert von G(t) im Zeitintervall T,
- ein Minimum und ein Maximum von G(t) im Zeitintervall T,
- eine Abweichung von G(t) vom Median oder vom Mittelwert im Zeitintervall T,
- eine Signalbreite von G(t) im Zeitintervall T,
- ein Frequenzspektrum von G(t) im Zeitintervall T, und
- eine oder mehrere charakteristische Frequenzen des Frequenzspektrums,
- eine Klassifikationseinheit zum Klassifizieren des Merkmalsvektors *M̅* (G((t)) anhand vorgegebener Kategorien, die jeweils eine Kontaktart der Teile mit einem Objekt einer Umgebung angeben, die sich jeweils durch entsprechende externe Kontakt-Kräfte Fₑₓₜ und/oder externe Kontaktmomente Mₑₓₜ vermitteln, zur Erzeugung eines Klassifizierungsergebnisses KE, und
- eine Einheit zum Steuern und/ oder Regeln des Aktors abhängig von dem Klassifizierungsergebnis KE.

## Claims

1. Method for the control and regulation of a robot by taking into consideration ambient contacts, wherein the robot comprises at least two parts, which are connected via an articulated joint that can be driven by an actuator, having the following steps:
- determining and storing a time-dependent one-dimensional or multi-dimensional variable G(t) by means of a sensor system, by means of which the temporal influence of one or a plurality of external contact forces Fₑₓₜ and/or of one or a plurality of external torques Mₑₓₜ on the parts can be described,
- providing a condition B for the variable G(t),
- provided the condition B has not been fulfilled by a G(t) at a time t₀, a feature vector (G(t)) is determined for the determined variable via a time interval T = [tₐ, tₑ], with tₐ = beginning of the time interval, tₑ = end of the time interval, t₀ ∈ T and t₀ < tₑ, said feature vector *M̅* (G(t)) comprising the following components:
- a median or average value, G(t), within the time interval T,
- a minimum and a maximum value, G(t), within the time interval T,
- a deviation, G(t), from the median or average value within the time interval T,
- a signal width, G(t), within the time interval T,
- a frequency spectrum, G(t), within the time interval T, and
- one or a plurality of characteristic frequencies of the frequency spectrum,
- classification of the feature vector *M̅* (G(t)) based on the specified categories, which each indicate a contact type of one of the parts or of the articulated joint to an object of an ambient environment, which are each conveyed by corresponding contact forces Fₑₓₜ and/or external contact torques Mₑₓₜ for generating a classification result KE, and
- control and/or regulation of the actuator for times t > t₀ dependent on the classification result KE.

2. Method according to Claim 1,
where the feature vector *M̅* (G(t)) additionally comprises the following components:
- a Shannon entropy or Shannon-entropy distribution, G(t), within the time interval T and/or
- a Hjorth parameter, G(t), within the time interval T and/or
- one or a plurality of energy parameters, G(t), within the time interval T and/or
- one or a plurality of auto-correlation parameters, G(t), within the time interval T and/or
- a skewness parameter, G(t), within the time interval T and/or
- one or a plurality of spectral phase parameters, G(t), within the time interval T and /or
- one or a plurality of spectral amplitude parameters, G(t), within the time interval T,

3. Method according to Claim 1 or 2,
where the beginning of the time interval T and the end tₑ of the time interval T are time-dependent, tₐ = tₐ(t) and tₑ = tₑ(t), or the end tₑ of the time interval T is time-dependent tₑ = tₑ(t).

4. Method according to one of Claims 1 to 3,
where the robot comprises a plurality of parts, which are connected via articulated joints than can be driven by actuators.

5. Method according to one of Claims 1 to 4,
where the variable G(t) indicates one or plurality of forces and/or one or a plurality of torques and/or one or a plurality of mechanical tensions and/or one or a plurality of pressures.

6. Method according to one of Claims 1 to 5,
where the sensor system comprises at least one sensor arranged on one of the parts having flatly arranged sensor elements for the position-sensitive detection of external forces Fₑₓₜ relative to the part, wherein the variable G(t) is determined based one the detected external forces Fₑₓₜ.

7. Method according to one of Claims 1 to 6,
wherein the sensor system comprises a torque and/or force and/or acceleration sensor connected to the articulated joints to detect one torque engaging the articulated joint and/or a force engaging the articulated joint and/or an acceleration engaging the articulated joint.

8. Method according to one of Claims 1 to 7,
wherein the variable G(t) is respectively determined for one or a plurality of parts and/or for one or a plurality of articulated joints.

9. Method according to one of Claims 1 to 8,
where, depending on the classification result KE, a control and/or regulation of the actuator takes place in such a way that a movement of the parts is stopped, slowed down, or a movement is introduced in the opposing direction.

10. Apparatus for the control and regulation of a robot by taking into consideration ambient contacts, wherein the robot comprises at least two parts, which are connected via an articulated joint that can be driven by an actuator, and for carrying out the method according to one of the preceding claims comprising:
- a sensor system for determining and storing a time-dependent variable G(t) by means of a sensor system, by means of which the temporal influence of one or a plurality of external contact forces Fₑₓₜ and/or of one or a plurality of external torques Mₑₓₜ on the parts can be described,
- an interface for the provision of a condition B for this variable G(t),
- an evaluation unit, which is designed and set up in such a way that, provided the condition B has not been fulfilled by a G(t) at a time t₀, a feature vector (G(t)) is determined for the determined variable via a time interval, T = [tₐ, tₑ], with tₐ = beginning of the time interval, tₑ = end of the time interval, t₀ ∈ T and t₀ < tₑ, said feature vector *M̅* (G(t)) comprising the following components:
- a median or average value of G(t) within the time interval T,
- a minimum and a maximum value, G(t), within the time interval T,
- a deviation of G(t) from the median or average value within the time interval T,
- a signal width, G(t), within the time interval T,
- a frequency spectrum, G(t), within the time interval T, and
- one or a plurality of characteristic frequencies of the frequency spectrum,
- a classification unit for classifying the feature vector *M̅* (G(t)) based on the specified categories, which each indicated a contact type of the parts to an object of an ambient environment, which are each conveyed by corresponding contact forces Fₑₓₜ and/or external contact torques Mₑₓₜ for generating a classification result KE, and
- a unit for the control and/or regulation of the actuator depending on the classification result KE.

## Revendications

1. Procédé, destiné à commander et à réguler des actionneurs d'un robot sous prise en considération de contacts environnants, le robot comprenant au moins deux pièces qui sont reliées par l'intermédiaire d'une liaison articulée susceptible d'être activée par un actionneur, comportant les étapes suivantes, consistant à :
- à l'aide d'un système de capteurs, déterminer et mémoriser une grandeur G(t) unidimensionnelle ou multidimensionnelle, variable en fonction du temps permettant de décrire l'action dans le temps d'une ou de plusieurs forces de contact Fₑₓₜ externes et/ou d'un ou de plusieurs moments externes Mₑₓₜ sur les pièces,
- mettre à disposition une condition B pour la grandeur G(t),
- si à un temps t₀, la condition B n'est pas satisfaite par G(t), il est déterminé pour la grandeur G(t) détectée sur un intervalle de temps T = [tₐ, t_{e]}, avec tₐ = début de l'intervalle de temps, tₑ = fin de l'intervalle de temps, t₀ ∈ T et t₀ < tₑ un vecteur de caractéristique *M̅* (G(t)), qui comprend les composants suivants :
- une médiane ou valeur moyenne de G(t) dans l'intervalle de temps T,
- un minimum et un maximum de G(t) dans l'intervalle de temps T,
- un écart de G(t) par rapport à la médiane ou à la valeur moyenne dans l'intervalle de temps T,
- une largeur de signal de G(t) dans l'intervalle de temps T,
- un spectre de fréquence de G(t) dans l'intervalle de temps T, et
- une ou plusieurs fréquences caractéristiques du spectre de fréquence,
- classifier le vecteur de caractéristique *M̅* (G(t)) à l'aide de catégories prédéfinies qui indiquent chacune un type de contact de l'une des pièces ou de la liaison articulée avec un objet d'un environnement, qui se transmettent respectivement par des forces de contact externes Fₑₓₜ correspondantes et/ou des moments de contact Mₑₓₜ externes, pour générer un résultat de classification KE, et
- commander et/ou réguler l'actionneur pour des temps t > t₀ en fonction du résultat de classification KE.

2. Procédé selon la revendication 1,
lors duquel le vecteur de caractéristique *M̅* (G(t) comprend en supplément les composants suivants :
- une entropie de shannon ou distribution d'entropie de shannon de G(t) dans l'intervalle de temps T et/ou
- un paramètre de Hjorth de G(t) dans l'intervalle de temps T et /ou
- un ou plusieurs paramètres d'énergie de G(t) dans l'intervalle de temps T et/ou
- un ou plusieurs paramètres d'autocorrélation de G(t) dans l'intervalle de temps T et/ou
- un paramètre de dissymétrie de G(t) dans l'intervalle de temps T et/ou
- un ou plusieurs paramètres de phase spectrale de G(t) dans l'intervalle de temps T et/ou
- un ou plusieurs paramètres d'amplitude spectrale de G(t) dans l'intervalle de temps T.

3. Procédé selon la revendication 1 ou 2,
lors duquel le début tₐ de l'intervalle de temps T et la fin tₑ de l'intervalle de temps T sont variables en fonction du temps tₐ = tₐ(t) et tₑ = tₑ(t) ou la fin tₑ de l'intervalle de temps T est variable en fonction du temps tₑ = tₑ(t).

4. Procédé selon l'une quelconque des revendications 1 à 3,
lors duquel le robot comprend plusieurs pièces, qui sont reliées par l'intermédiaire de plusieurs liaisons articulées susceptibles d'être activées par des actionneurs.

5. Procédé selon l'une quelconque des revendications 1 à 4,
lors duquel la grandeur G(t) indique une ou plusieurs forces et/ou un ou plusieurs couples de rotation et/ou une ou plusieurs tensions mécaniques et/ou une ou plusieurs pressions.

6. Procédé selon l'une quelconque des revendications 1 à 5,
lors duquel le système de capteur comprend au moins un capteur placé sur l'une des pièces, pourvu d'éléments capteurs placés en nappe, pour la détection sensible à la position de forces externes Fₑₓₜ par rapport à la pièce, la grandeur G(t) étant déterminée sur la base des forces externes Fₑₓₜ détectées.

7. Procédé selon l'une quelconque des revendications 1 à 6,
lors duquel le système de capteur comprend un capteur de couple de rotation et/ou de force et/ou d'accélération relié avec l'une des liaisons articulées, pour détecter un couple de rotation exercé sur la liaison articulée et/ou une force exercée sur la liaison articulée et/ou une accélération exercée sur la liaison articulée.

8. Procédé selon l'une quelconque des revendications 1 à 7,
lors duquel la grandeur G(t) est déterminée chaque fois pour une ou plusieurs des pièces et/ou pour une ou plusieurs liaisons articulées.

9. Procédé selon l'une quelconque des revendications 1 à 8,
lors duquel, en fonction du résultat de classification KE, une commande et/ou une régulation de l'actionneur s'effectue de telle sorte qu'un déplacement des pièces est stoppé, ralenti, accéléré ou qu'un déplacement dans la direction opposé est initié.

10. Dispositif destiné à commander et à réguler des actionneurs d'un robot sous prise en considération de contacts environnants, le robot comprenant au moins deux pièces qui sont reliées par l'intermédiaire d'une liaison articulée susceptible d'être activée par un actionneur et à réaliser un procédé selon l'une quelconque des revendications précédentes, comportant :
- un système de capteur destiné à déterminer et à mémoriser une grandeur G(t) variable en fonction du temps permettant de décrire l'action dans le temps d'une ou de plusieurs forces de contact Fₑₓₜ externes et/ou d'un ou de plusieurs moments externes Mₑₓₜ sur les pièces,
- une interface destinée à mettre à disposition une condition B pour ladite grandeur G(t),
- une unité d'évaluation qui est réalisée et aménagée de telle sorte que si la condition B n'est pas satisfaite par G(t) à un temps t₀, il est déterminé pour la grandeur G(t) détectée sur un intervalle de temps T = [tₐ, tₑ], avec tₐ = début de l'intervalle de temps, tₑ = fin de l'intervalle de temps, t₀ ∈ t₀ < tₑ un vecteur de caractéristique *M̅* (G(t))
qui comprend les composants suivants :
- une médiane ou valeur moyenne de G(t) dans l'intervalle de temps T,
- un minimum et un maximum de G(t) dans l'intervalle de temps T,
- un écart de G(t) par rapport à la médiane ou à la valeur moyenne dans l'intervalle de temps T,
- une largeur de signal de G(t) dans l'intervalle de temps T,
- un spectre de fréquence de G(t) dans l'intervalle de temps T, et
- une ou plusieurs fréquences caractéristiques du spectre de fréquence,
- une unité de classification, destinée à classifier le vecteur de caractéristique *M̅* (G(t)) à l'aide de catégories prédéfinies qui indiquent chacune un type de contact des pièces avec un objet d'un environnement, qui se transmettent respectivement par des forces de contact externes Fₑₓₜ correspondantes et/ou des moments de contact Mₑₓₜ externes, pour générer un résultat de classification KE, et
- une unité destinée à commander et/ ou à réguler l'actionneur en fonction du résultat de classification KE.
